# EUROPEAN PATENT APPLICATION

(11) **EP 4 756 671 A1**
(43) Date of publication of application: **10.06.2026**
(21) Application number: 24849421.3
(22) Date of filing: 16.07.2024
(51) Int. Cl.: G06K 19/077, B44F 1/06, B44F 1/00

(54) **NON-CONTACT TYPE METAL CARD HAVING LIGHT-EMITTING DEVICE**

(30) Priority: 03.08.2023 KR 20230101418; 15.01.2024 KR 20240005966
(71) Applicant: N Able Co., Ltd., Paju-si Gyeonggi-do 10904 (KR)
(72) Inventor: KIM, Jin Hwa, Paju-si Gyeonggi-do 10906 (KR)
(74) Representative: Gulde & Partner
(86) International application number: PCT/KR2024/010148
(87) International publication number: WO 2025/028851

(57) **Abstract**

A non-contact type metal card having a light-emitting device includes a card chip, an antenna member including an antenna including a primary coil antenna and a secondary coil antenna wound in a loop shape and a light-emitting unit including a plurality of LED chips, a shielding sheet laminated on the antenna member, and a metal body having an accommodation opening into which the card chip is inserted and having a milling portion processed to accommodate the shielding sheet and the antenna member on an inner side, wherein the light-emitting unit emits light through a plurality of transmission holes aligned in the metal body.

## Description

### CROSS-REFERENCE TO RELATED APPLICATION

Pursuant to 35 U.S.C. § 119(a), this application claims the benefit of Korean Patent Application No. 10-2023-0101418, filed on August 3, 2023 and Application No. 10-2024-0005966 filed on January 15, 2024, the contents of which are incorporated by reference herein in its entirety.

### BACKGROUND

### 1. Technical Field

The present disclosure relates to a non-contact type metal card having a light-emitting device and a method for manufacturing the same.

### 2. Description of the Related Art

Generally, cards are classified into magnetic cards using a magnetic stripe, smart cards using an IC chip, and hybrid cards combining these two methods, depending on a recording method; smart cards are classified into contact type, non-contact type, and combination cards combining these two types, depending on a reading method; and the non-contact type cards are further classified into near field communication (NFC) cards, which may only be read within a distance of several to several tens of centimeters, and RF cards, which may be read from a longer distance, and generally, these types are used in combination.

Meanwhile, plastic cards, which are generally issued to specific members to defer payment for goods or services for a certain period of time, are primarily used as cash substitutes, such as credit cards, cash cards, and transportation cards, or as various medical treatment cards and membership cards. Nowadays, various types of plastic cards differentiated based on credit ratings of customers, are provided to customers.

Among these, special cards, such as gold cards and platinum cards, manufactured for VIP customers with high credit ratings, are coated in gold or silver to create a more premium feel.

However, the aforementioned special cards express gold and silver colors through a printing method in which gold or silver powder is mixed with pigment, and since the gold powder and silver powder mixed with pigment are not pure gold or silver but rather a mixture of other pigments and adhesives, they cannot achieve the high-gloss texture emanating from pure metals.

In addition, unlike pure metals whose gloss and texture remain substantially unchanged over time, gold or silver powders are susceptible to deterioration depending on humidity and temperature conditions, and thus, prolonged use of plastic cards may lead to discoloration and deterioration of the coating, causing drawbacks, such as the loss of gloss, which ultimately makes it difficult to provide high-quality cards.

Accordingly, metal cards formed of metallic materials have recently been utilized as an alternative. Since metal cards may provide a sense of weight and are thus perceived as premium cards, metal thicknesses of 0.6 to 0.7mm have been applied, replacing the commonly used 0.3 to 0.4mm, to meet market demand.

However, the conventional metal cards are provided as slit-type metal cards containing PVC materials and thus have a problem of being harmful to the human body, and in addition, since the conventional metal cards lack additional functional components other than the presence of the metal layer, it is difficult for them to offer scarcity in product value.

In addition, since the conventional metal cards lack additional functional components other than the presence of the metal layer, it is difficult for them to offer scarcity in product value as a private label credit card (PLCC).

### SUMMARY OF THE INVENTION

An aspect of the present disclosure is to provide a non-contact type metal card having a light-emitting device capable of enhancing a value by providing aesthetic appeal to the metal card, and a method for manufacturing the same.

The present invention may include the following embodiments in order to achieve the above-described object.

In an aspect, a non-contact type metal card having a light-emitting device includes: a card chip; an antenna member including an antenna including a primary coil antenna and a secondary coil antenna wound in a loop shape and a light-emitting unit including a plurality of LED chips; a shielding sheet laminated on the antenna member; and a metal body having an accommodation opening into which the card chip is inserted and having a milling portion processed to accommodate the shielding sheet and the antenna member on an inner side, wherein the light-emitting unit emits light through a plurality of transmission holes aligned in the metal body.

In another aspect, a non-contact type metal card having a light-emitting device includes: a card chip; an antenna member including an antenna including a primary coil antenna and a secondary coil antenna wound in a loop shape and a light-emitting unit including a plurality of LED chips; a shielding sheet laminated on the antenna member; and a metal body having an accommodation opening and a slit portion into which the card chip is inserted and having a milling portion processed to accommodate the shielding sheet and the antenna member on an inner side, wherein the light-emitting unit emits light through a plurality of transmission holes aligned in the metal body.

In another aspect, a non-contact type metal card having a light-emitting device includes: a card chip; an antenna member including an antenna including a primary coil antenna and a secondary coil antenna wound in a loop shape and a light-emitting unit including a plurality of LED chips; and a metal body having an accommodation opening and a slit portion into which the card chip is inserted and having a milling portion processed to accommodate the antenna member on an inner side, wherein the light-emitting unit emits light through a plurality of transmission holes aligned in the metal body.

The light-emitting unit may include a light-emitting pattern, on which an LED chip is mounted, including one or two or more loop coil patterns and a primary coil antenna and a secondary coil antenna for performing a wireless communication function in a non-contact manner on a substrate, as a substrate formed of a flexible material, on which a circuit is patterned.

The light-emitting unit may include a light-emitting pattern, on which an LED chip is mounted, configured to extend as a pattern from both ends of the primary coil antenna and the secondary coil antenna for performing a wireless communication function in a non-contact manner on the substrate, as a substrate formed of a flexible material, on which a circuit is patterned.

The antenna member may further include a tuning capacitor portion compensating for capacitance of a coil antenna, which is an MLCC type chip capacitor or a pattern capacitor including an arrangement of an upper conductive pattern and a lower conductive pattern on a substrate.

In another aspect, a method for manufacturing a non-contact type metal card having a light-emitting device includes: a) processing a metal body capable of accommodating a card chip and an antenna member so that light emitted from a plurality of LED chips is transmitted on one surface of the metal body in a point light emission manner; b) processing a shielding sheet and laminating the shielding sheet on a substrate on which a primary coil antenna, a secondary coil antenna, and a light-emitting unit are mounted; c) assembling the antenna member, on which the shielding sheet is laminated, to the metal body; d) injecting a molding material into an accommodation opening and a transmission hole and molding; e) bonding a printed sheet to any one of both sides of the metal body; f) processing a recess matched to a shape of a card chip on the inside of an opening in which the card chip is to be mounted; and g) installing the card chip in the recess.

In another aspect, a method for manufacturing a non-contact type metal card having a light-emitting device includes: a) processing a metal body capable of accommodating a card chip and an antenna member so that light emitted from a plurality of LED chips is transmitted on one surface of the metal body in a point light emission manner; b) laminating on a substrate on which a primary coil antenna, a secondary coil antenna, and a light-emitting unit are mounted; c) assembling an antenna member on which a light-emitting unit is mounted to the metal body; d) injecting a molding material into a slit portion and an accommodation opening and a transmission hole and molding; e) bonding a printed sheet to any one of both sides of the metal body; f) processing a recess matched to a shape of a card chip on the inside of an opening in which the card chip is to be mounted; and g) installing the card chip in the recess.

In a), a plurality of transmission holes may be arranged to be spaced apart from each other but may be arranged directly above the LED chip.

may include: processing the accommodation opening to which the card chip is assembled to the metal body, the plurality of transmission holes aligned to allow light emitted from the light-emitting unit to be transmitted therethrough, and a milling portion to accommodate the antenna member assembled with the shielding sheet on the opposite surface.

may include: processing the accommodation opening to which the card chip is assembled in the metal body, a slit formed on one surface of the accommodation opening in which the chip is accommodated to the end of an outer portion of the metal body, a plurality of transmission holes aligned to allow light emitted from the light-emitting unit to be transmitted therethrough, and a milling portion to accommodate the antenna member assembled with the shielding sheet on the opposite surface.

may include: processing an accommodation opening to which the card chip is assembled in the metal body, a plurality of transmission holes aligned to allow light emitted from the light-emitting unit to be transmitted therethrough, and a milling portion to accommodate the antenna member assembled on the opposite surface.

may include: processing the accommodation opening to which the card chip is assembled in the metal body, a slit formed on one surface of the accommodation opening in which the chip is accommodated to the end of an outer portion of the metal body, a plurality of transmission holes aligned to allow light emitted from the light-emitting unit to be transmitted therethrough, and a milling portion to accommodate the antenna member assembled on the opposite surface.

In an aspect, a non-contact type metal card having a light-emitting device includes: a card chip; an antenna member including an antenna including a primary coil antenna and a secondary coil antenna wound in a loop shape and a light-emitting unit including a plurality of LED chips; a shielding sheet laminated on the antenna member; and a metal body having an accommodation opening into which the card chip is inserted and having a milling portion processed to accommodate the shielding sheet and the antenna member on an inner side, wherein the light-emitting unit emits light through a plurality of transmission holes aligned in the metal body.

In another aspect, a non-contact type metal card having a light-emitting device includes: a card chip; an antenna member including an antenna including a primary coil antenna and a secondary coil antenna wound in a loop shape and a light-emitting unit including a plurality of LED chips; a shielding sheet laminated on the antenna member; and a metal body having an accommodation opening and a slit portion into which the card chip is inserted and having a milling portion processed to accommodate the shielding sheet and the antenna member on an inner side, wherein the light-emitting unit emits light through a plurality of transmission holes aligned in the metal body.

In another aspect, a non-contact type metal card having a light-emitting device includes: a card chip; an antenna member including an antenna including a primary coil antenna and a secondary coil antenna wound in a loop shape and a light-emitting unit including a plurality of LED chips; and a metal body having an accommodation opening and a slit portion into which the card chip is inserted and having a milling portion processed to accommodate the antenna member on an inner side, wherein the light-emitting unit emits light through a plurality of transmission holes aligned in the metal body.

The light-emitting unit may include a light-emitting pattern, on which an LED chip is mounted, including one or two or more loop coil patterns and a primary coil antenna and a secondary coil antenna for performing a wireless communication function in a non-contact manner on a substrate, as a substrate formed of a flexible material, on which a circuit is patterned.

The light-emitting unit may include a light-emitting pattern, on which an LED chip is mounted, configured to extend as a pattern from both ends of the primary coil antenna and the secondary coil antenna for performing a wireless communication function in a non-contact manner on the substrate, as a substrate formed of a flexible material, on which a circuit is patterned.

The antenna member may further include a tuning capacitor portion compensating for capacitance of a coil antenna, which is an MLCC type chip capacitor or a pattern capacitor including an arrangement of an upper conductive pattern and a lower conductive pattern on a substrate.

In another aspect, a method for manufacturing a non-contact type metal card having a light-emitting device includes: a) processing a metal body capable of accommodating a card chip and an antenna member so that light emitted from a plurality of LED chips is transmitted on one surface of the metal body in a point light emission manner; b) processing a shielding sheet and laminating the shielding sheet on a substrate on which a primary coil antenna, a secondary coil antenna, and a light-emitting unit are mounted; c) assembling the antenna member, on which the shielding sheet is laminated, to the metal body; d) injecting a molding material into an accommodation opening and a transmission hole and molding; e) bonding a printed sheet to any one of both sides of the metal body; f) processing a recess matched to a shape of a card chip on the inside of an opening in which the card chip is to be mounted; and g) installing the card chip in the recess.

In another aspect, a method for manufacturing a non-contact type metal card having a light-emitting device includes: a) processing a metal body capable of accommodating a card chip and an antenna member so that light emitted from a plurality of LED chips is transmitted on one surface of the metal body in a point light emission manner; b) laminating on a substrate on which a primary coil antenna, a secondary coil antenna, and a light-emitting unit are mounted; c) assembling an antenna member on which a light-emitting unit is mounted to the metal body; d) injecting a molding material into a slit portion and an accommodation opening and a transmission hole and molding; e) bonding a printed sheet to any one of both sides of the metal body; f) processing a recess matched to a shape of a card chip on the inside of an opening in which the card chip is to be mounted; and g) installing the card chip in the recess.

In a), a plurality of transmission holes may be arranged to be spaced apart from each other but may be arranged directly above the LED chip.

a) may include: processing an accommodation opening to which the card chip is assembled to the metal body, the plurality of transmission holes aligned to allow light emitted from a light-emitting unit to be transmitted therethrough, and a milling portion to accommodate the antenna member assembled with a shielding sheet on the opposite surface.

a) may include: processing the accommodation opening to which the card chip is assembled in the metal body, a slit formed on one surface of the accommodation opening in which the chip is accommodated to the end of an outer portion of the metal body, the plurality of transmission holes aligned to allow light emitted from thea light-emitting unit to be transmitted therethrough, and the milling portion to accommodate the antenna member assembled with the shielding sheet on the opposite surface.

a) may include: processing the accommodation opening to which the card chip is assembled in the metal body, the plurality of transmission holes aligned to allow light emitted from the light-emitting unit to be transmitted therethrough, and the milling portion to accommodate the antenna member assembled on the opposite surface.

a) may include: processing the accommodation opening to which the card chip is assembled in the metal body, a slit formed on one surface of the accommodation opening in which the chip is accommodated to the end of an outer portion of the metal body, the plurality of transmission holes aligned to allow light emitted from a light-emitting unit to be transmitted therethrough, and the milling portion to accommodate the antenna member assembled on the opposite surface.

The present disclosure improves aesthetics and enhances the scarcity of a product by implementing point light emission through the addition of a light-emitting device to a metal body.

### BRIEF DESCRIPTION OF THE DRAWING FIGURES

FIG. 1 is a circuit diagram including a metal card and a reader.
FIG. 2 is a cross-sectional view of a metal card according to the present disclosure.
FIGS. 3 to 7 are cross-sectional views of a metal body.
FIG. 8 is a cross-sectional view illustrating a metal body.
FIG. 9 is a cross-sectional view illustrating another embodiment of a metal card.
FIG. 10 is a plan view illustrating another embodiment of a metal body.
FIG. 11 is a plan view illustrating an antenna member of the present disclosure.
FIG. 12 is a side view of a substrate.
FIG. 13 is a circuit diagram of another embodiment including a metal card and a reader.
FIG. 14 is a plan view illustrating another embodiment of an antenna member.
FIGS. 15 to 23 are diagrams illustrating a method for manufacturing a non-contact type metal card having a light-emitting device according to the present disclosure.
FIGS. 24 to 30 are diagrams illustrating a method for manufacturing a metal card according to another embodiment.
FIG. 31 is a circuit diagram illustrating another embodiment of the present disclosure.
FIG. 32 is a plan view illustrating another embodiment of the present disclosure.
FIG. 33 is a side view of FIG. 32.
FIG. 34 is a front view of FIG. 32.
FIG. 35 is a plan view illustrating an antenna member according to another embodiment.
FIG. 36 is a side view illustrating an antenna member according to another embodiment.
FIGS. 37 to 46 are diagrams illustrating another embodiment.

### DETAILED DESCRIPTION OF THE EMBODIMENTS

While the present disclosure is susceptible to various modifications and has various embodiments, specific embodiments are illustrated in the drawings and described in detail. However, it should be understood that there is no intent to limit the present disclosure to specific embodiments but rather to encompass all modifications, equivalents, and alternatives within the spirit and technical scope of the present disclosure for connecting and/or securing structures extending in different directions.

The terms used in the present specification are merely used to describe particular exemplary embodiments and are not intended to limit the present disclosure. An expression used in the singular encompasses the expression of the plural, unless it has a clearly different meaning in the context.

In the present specification, it is to be understood that the terms, such as "including" or "having," etc., are intended to indicate the existence of the features, numbers, steps, actions, elements, parts, or combinations thereof disclosed in the specification, and are not intended to preclude the possibility that one or more other features, numbers, steps, actions, elements, parts, or combinations thereof may exist or may be added.

Hereinafter, an embodiment of a non-contact type metal card and a manufacturing method thereof according to the present disclosure will be described with reference to the accompanying drawings.

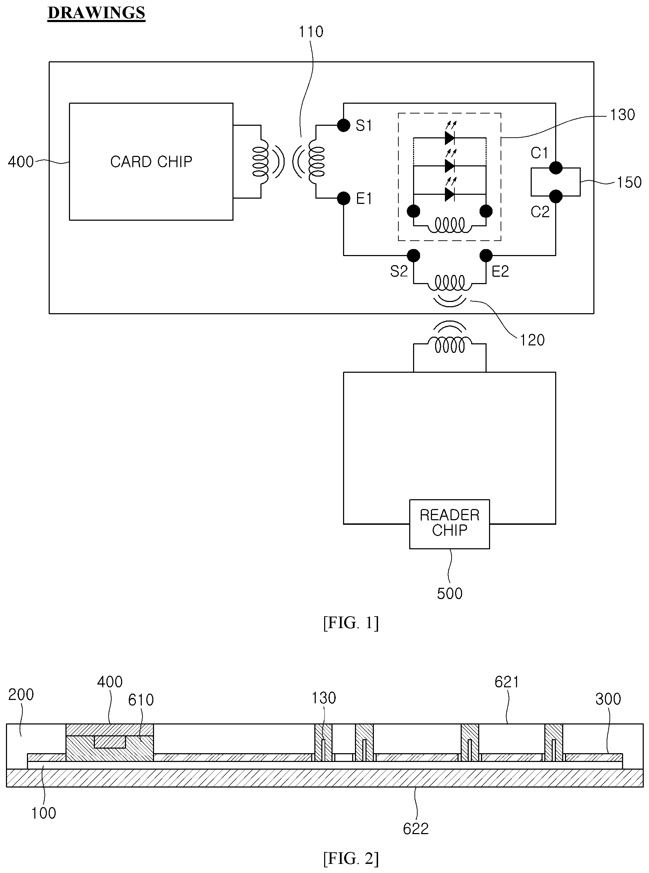

FIG. 1 is a circuit diagram including a metal card and a reader.

Referring to FIG. 1, the metal card according to the present disclosure may include an antenna member 100 assembled with a metal body 200 formed of metal and including a primary coil antenna 110, a secondary coil antenna 120, and a light-emitting unit 130, and a card chip 400.

The primary coil antenna 110 may communicate with the card chip 400, and the secondary coil antenna 120 may communicate with a reader chip 500. The primary coil antenna 110 and the secondary coil antenna 120 are installed as loop type antennas on the antenna member 100.

Here, a starting point S1 of the primary coil antenna 110 is connected to an ending point E2 of the secondary coil antenna 120, and an ending point E1 of the primary coil antenna 110 is electrically connected to a starting point S2 of the secondary coil antenna 120.

Such a configuration may be achieved by coupling the antenna member 100, described below, to the assembled metal body 200. The metal body 200 is described with reference to FIGS. 2 to 4.

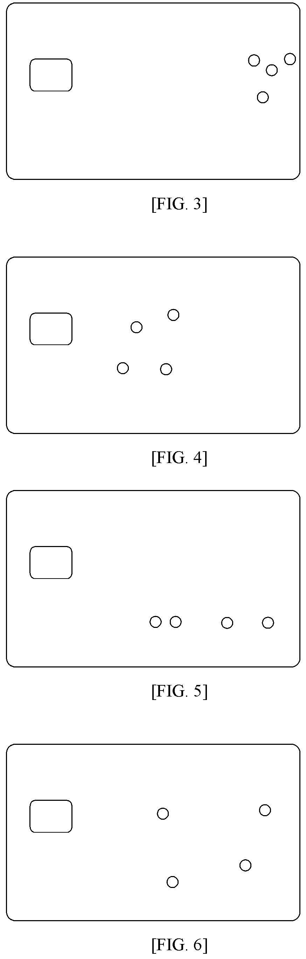

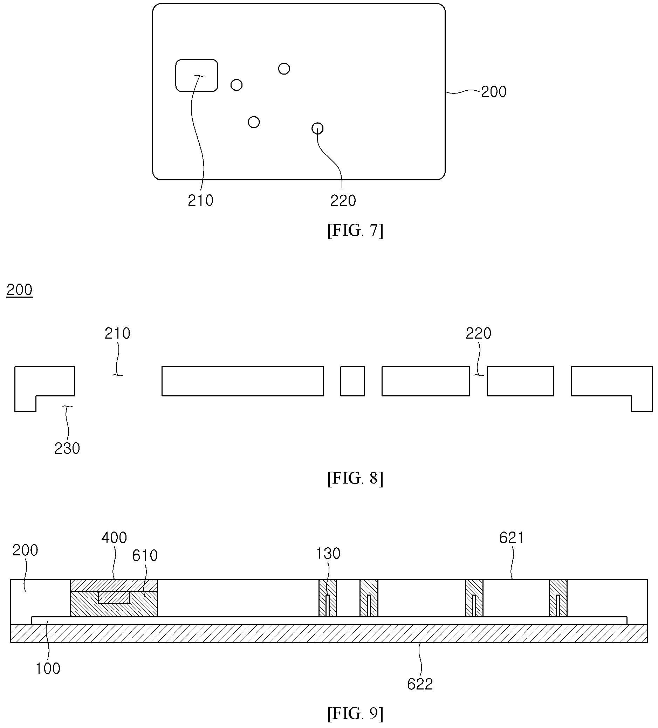

FIG. 2 is a cross-sectional view of a metal card according to the present disclosure, FIGS. 3 to 7 illustrate various embodiments of a metal body, and FIG. 8 is a cross-sectional view of the metal body.

Referring to FIGS. 2 through 8, a metal card according to the present disclosure may include the antenna member 100 including the primary coil antenna 110, the secondary coil antenna 120, and a light-emitting unit, a shielding sheet 300 on the antenna member 100, the metal body 200 that accommodates the shielding sheet 300 and the antenna member 100, and the card chip 400.

The metal body 200 may be formed of a metal plate 210 and may accommodate the aforementioned antenna member 100 and the card chip 400. Printing may be possible on at least one of the two sides of the metal body 200.

To this end, the metal body 200 may include an accommodation opening 210 for accommodating the card chip 400, a plurality of transmission holes 220 through which light emitted from a light-emitting device passes, and a milling portion 230 processed to accommodate the antenna member 100.

Here, the transmission holes 220 may be configured in plurality. Examples of the arrangement, including the number and spacing and positions between the transmission holes 220, are illustrated in FIGS. 3 through 7. The arrangement of the transmission holes 220 may be modified variously other than those illustrated in the drawings, and the present invention is not limited to the number or the arrangement of the transmission holes 220.

However, for the sake of a detailed description of the present disclosure, the metal body 200 illustrated in FIG. 5 will be primarily described.

The accommodation opening 210 is opened in the metal body 200 to allow the chip 400 to be inserted thereinto.

A plurality of transmission holes 220 are disposed to be spaced apart from the accommodation opening 210 to allow light emitted from LED chips 131 to 134 assembled and installed there below to be externally transmitted therethrough. Here, the transmission holes 220 may be filled with a light-transmitting plastic resin for light diffusion or protection of the LED chips 131 to 134.

The milling portion 230 may be processed as a recess inwardly recessed from the opposite surface of the metal body 200 to form a space in which the antenna member 100 is accommodated.

In addition, the present disclosure may include other embodiments.

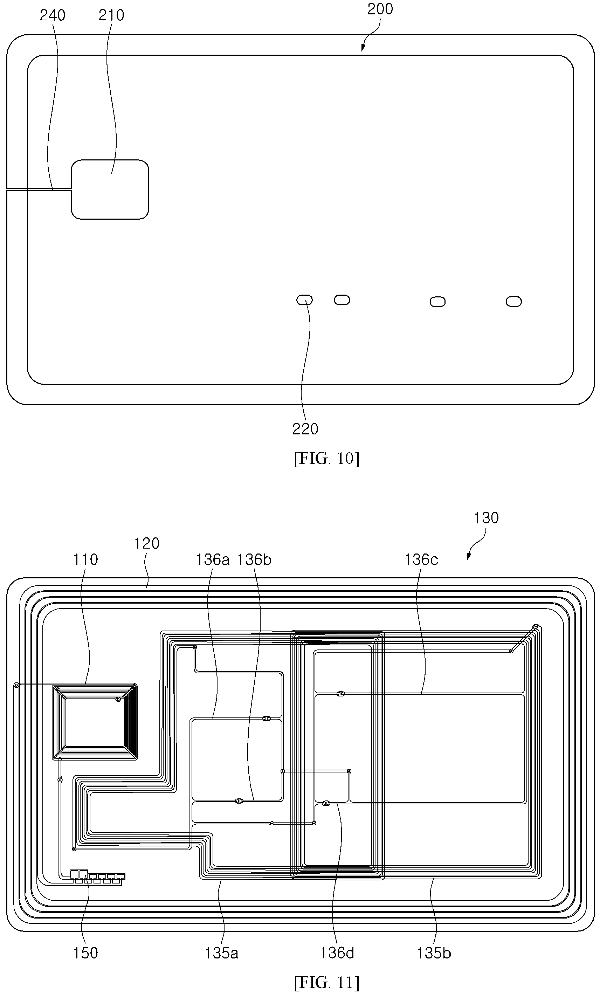

For example, as in the metal card illustrated in FIG. 9, a shielding material may be omitted, and as in the example illustrated in FIG. 10, the metal body 200 may include a slit portion 240 extending outward from the accommodation opening 210.

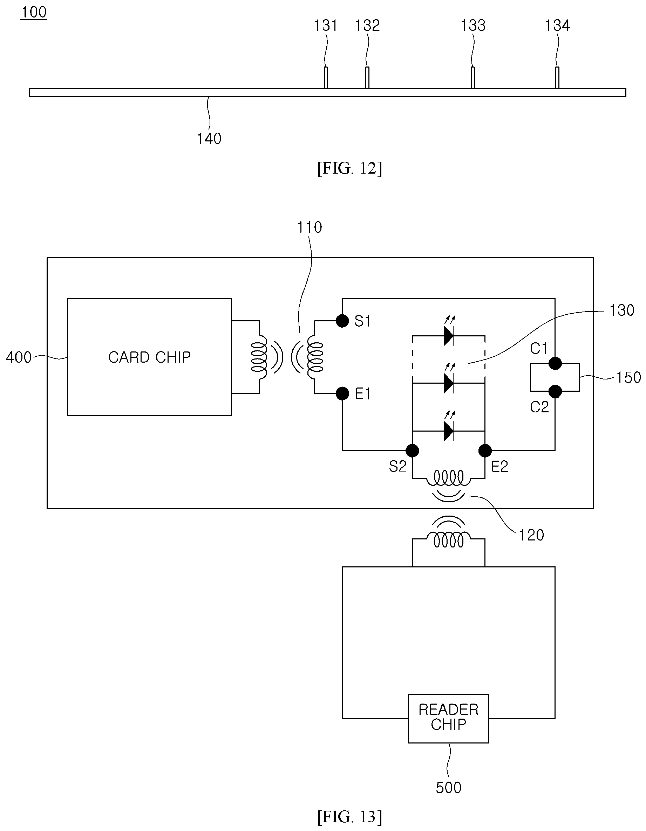

The antenna member 100 is described with reference to FIGS. 11 and 12.

FIG. 11 is a plan view illustrating an antenna member, and FIG. 12 is a side view of a substrate.

Referring to FIGS. 11 and 12, the antenna member 100 may further include the primary coil antenna 110, the secondary coil antenna 120, the light-emitting unit 130, a substrate 140, and a tuning capacitor portion 150.

The substrate 140 may be a circuit board, on both surfaces of which the primary coil antenna 110, the secondary coil antenna 120, and a light-emitting pattern 135 are mounted and/or printed, and may be formed of a flexible material.

The primary coil antenna 110 is mounted in a loop shape on one surface of the substrate 140, in which the starting point is connected to the starting point of the secondary coil antenna 120 via the tuning capacitor portion 150 and the ending point is electrically connected to the starting point of the secondary coil antenna 120.

The secondary coil antenna 120 is installed in a loop shape on the outside of the primary coil antenna 110 (e.g., on the outer edge of the substrate 140).

The tuning capacitor portion 150 may compensate for the capacitance of the primary coil and may include a first terminal (C1, see FIG. 1) to which the primary coil antenna 110 is connected and a second terminal (C2, see FIG. 1) to which the secondary coil antenna 120 is connected.

Here, the tuning capacitor portion 150 may include an MLCC-type chip capacitor or a pattern capacitor including an array of upper and lower conductive patterns.

The light-emitting unit 130 may include a plurality of LED chips 131 to 134, light-emitting patterns 135a and 135b conducting electricity to the LED chips 131 to 134, and pad patterns 136a, 136b, 136c, and 136d on which the LED chips are mounted.

The light-emitting patterns 135a and 135b may include one or more loop coil patterns located inside the primary coil antenna 110 and secondary coil antenna 120. Here, the loop coil patterns may be formed as separate loop patterns without connection points from the primary coil antenna 110 and secondary coil antenna 120 and may have their own coil antenna (see FIG. 1) to obtain power.

Here, the light-emitting unit 130 may further include the LED chips 131 to 134 and a light diffusion unit (not shown) that surrounds the LED chips 131 to 134 themselves or diffuses light in a nearby upright dam shape so that light emitted from the LED chips 131 to 134 may be diffused.

The LED chips 131 to 134 are mounted on a plurality of pad patterns 136a to 136d formed on the light-emitting patterns 135a and 135b. When current is generated by the secondary coil antenna 120, the LED chips 131 to 134 emit light as the generated current is input through the light-emitting patterns 135a and 135b. The light emitted here is diffused by the light diffusion unit (not shown) and may be output to the outside through the transmission hole 220.

Here, the LED chips 131 to 134 may be positioned directly below the transmission holes 220. That is, the positions and number of transmission holes 220 are identical to the positions and numbers of the LED chips 131 to 134.

Therefore, when a user brings his or her card close to the reader chip 500, the LED chips 131 to 134 emit light due to the current generated from the secondary coil antenna 120. At this time, the LED chips 131 to 134 transmit light through the plurality of transmission holes 220 spaced apart from each other in the metal body 200, so that users perceive light in the form of point light emission.

In addition, the present disclosure may include an embodiment in which the aforementioned light-emitting pattern and the coil antenna patterns are connected in a non-contact manner, as well as a configuration in which the light-emitting pattern and the antenna patterns form contact with each other.

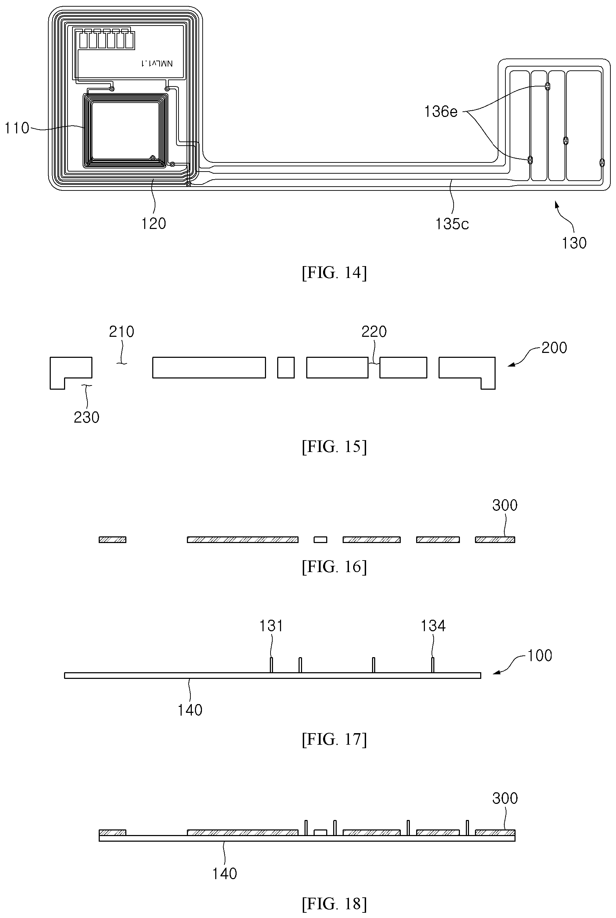

This will be described with reference to FIGS. 13 and 14.

FIG. 13 is a circuit diagram of another embodiment including a metal card and a reader, FIG. 14 is a plan view illustrating another embodiment of an antenna member.

Referring to FIGS. 13 and 14, a light-emitting pattern 136c is connected to each of end points of the primary coil antenna 110 and the secondary coil antenna 120 and extends in one direction. Here, the light-emitting pattern may include a plurality of pad patterns 136e on which LED chips are mounted.

Therefore, the light-emitting pattern 136c may supply power generated from the primary coil antenna 110 and the secondary coil antenna 120 to the LED chips 131 to 134 mounted on the pad patterns 136e.

The present disclosure includes the above-described configuration, and hereinafter, a method for manufacturing a non-contact type metal card having a light-emitting device according to the present disclosure will be described.

FIGS. 15 to 23 illustrate each operation of a method for manufacturing a non-contact type metal card having a light-emitting device according to the present disclosure.

Referring to FIGS. 15 to 23, an embodiment of the present disclosure may include an operation (a) of processing the metal body 200, an operation (b) of processing the shielding sheet 300, an operation (c) of assembling the shielding sheet 300 to a substrate including the primary coil antenna 110, the secondary coil antenna 120, and the light-emitting unit 130, an operation (d) of assembling the antenna member 100 to which the shielding sheet 300 is assembled and the metal body 200, an operation (e) of molding the transmission hole 220 and the accommodation opening 210 of the metal body 200, an operation (f) of printing on upper and lower surfaces of the metal body 200, a pocket milling operation (g), and a chip insertion operation (h).

Referring to FIG. 15, the operation (a) of processing the metal body 200 is an operation of processing the metal body 200 to process the accommodation opening 210, the transmission hole 220, and the milling portion 230. The accommodation opening 210 is processed to a size large enough to accommodate the card chip 400, and the transmission hole 220 is formed at the same position as the LED chip.

In addition, the milling portion 230 is processed to be inwardly recessed from one side of the opposite surface of the metal body 200 such that a bezel (not assigned a reference numeral) is formed on the outside, thereby accommodating the antenna member 100.

The metal body 200 may have a shape in which a plurality of bodies are configured within a single sheet. Accordingly, the plurality of metal bodies 200 may be automatically processed simultaneously. As the sheet for such mass processing of the metal bodies 200 is generally well-known in the art, a detailed description thereof will be omitted.

Referring to FIG. 16, the operation (b) of processing the shielding sheet is an operation of processing the openings and holes so as to be matched to the number, position, and width of the accommodation openings 210 and transmission holes 220 of the metal body 200.

Referring to FIG. 17, the operation (c) of assembling the antenna member 100 is an operation of assembling the shielding sheet 300 onto the antenna member 100.

The antenna member 100 includes the primary coil antenna 110, the secondary coil antenna 120, and the tuning capacitor portion 150 patterned and mounted on the substrate 140 formed of a flexible material. In addition, the light-emitting patterns 135a and 135b are formed on the substrate 140, and the plurality of LED chips 131 to 134 are mounted on the light-emitting pattern 135. At this time, the light-emitting pattern portion 143 may be provided with a light diffusion unit (not shown) centered around each of the LED chips 131 to 134.

For example, the light diffusion unit (not shown) may form a dam centered around the LED chips 131 to 134, or as another embodiment, the light diffusion unit may be a plastic liquid resin (e.g., a light-transmitting epoxy) that is applied and cured in an upper portion of the LED chips 131 to 134 to diffuse light.

The shielding sheet 300 is laminated on the substrate on which the plurality of LED chips 131 to 134 are mounted, and the LED chips 131 to 134 are exposed to the outside through holes processed in the shielding sheet 300.

Referring to FIG. 18, the operation (d) of assembling the antenna member 100 and the metal body 200 is an operation of assembling the antenna member 100 with the shielding sheet 300 laminated thereon to the milling portion 230 inwardly recessed on the lower surface of the metal body 200.

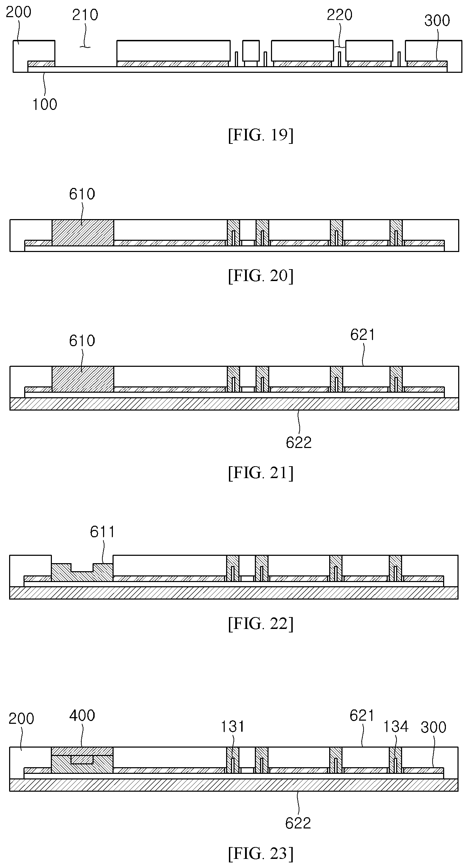

Referring to FIG. 19, the molding operation (e) is an operation of injecting a molding material 610, such as epoxy, into the accommodation opening 210 and the transmission hole 220 to mold the molding material. Here, after molding, a resin layer is formed on the upper and lower surfaces of the metal body 200, providing insulation and protection to the upper and lower surfaces of the metal body 200.

Referring to FIG. 20, the operation (f) of bonding printed sheets 621 and 622 is an operation of bonding the printed sheets to the upper and lower surfaces of the assembly, on which a resin layer has been formed after molding. Here, the printed sheets 621 and 622 may be bonded using a laminating process. In addition, the printed sheets 621 and 622 may be laminated with magnetic stripe tape or an overlay film.

Alternatively, the printed sheets may be bonded to the upper surface of the metal body, and a DP printing process may be further included on the bonded printed sheets.

Referring to FIG. 21, the pocket milling operation (g) is an operation of forming a recess 611 in the molding material 610. A worker processes the molding material 610 to form the recess 611 at the upper end of the molding material 610, thereby forming a shape into which the card chip 400 may be assembled.

Referring to FIGS. 22 and 23, the chip insertion operation (h) is an operation of assembling the card chip 400 onto the upper surface. Here, the card chip 400 is a semiconductor chip mounted on the upper surface of the chip substrate and is installed in the recess 611 of the molding material 610 in the reverse direction. At this time, the molding material 610 and the card chip 400 are bonded using an adhesive, such as a hot melt or adhesive film.

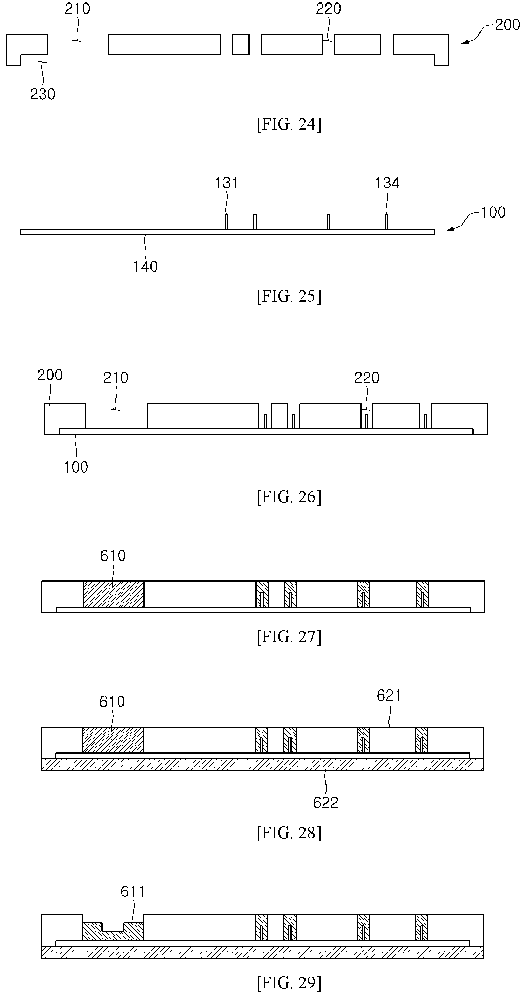

The present disclosure may also include other embodiments, which will be described with reference to FIG. 24.

FIGS. 24 to 30 illustrate other embodiments of the present disclosure.

Referring to FIGS. 24 to 30, another embodiment of the present disclosure may include an operation (a) of processing the metal body 200, an operation (b) of assembling an antenna member to a substrate including the primary coil antenna 110, the secondary coil antenna 120, and the light-emitting unit 130, an operation (c) of assembling the metal body 200 to the antenna member, an operation (d) of molding the transmission hole 220 and the accommodation opening 210 of the metal body 200, an operation (e) of printing on the upper and lower surfaces of the metal body 200, a pocket milling operation (f), and a chip insertion operation (g).

The operation (a) of processing the metal body 200 includes processing the metal body 200 to process the accommodation opening 210, the transmission hole 220, and the milling portion 230. The accommodation opening 210 is processed to a size large sufficient to accommodate the card chip 400, and the transmission hole 220 is formed at the same position as the LED chip.

In addition, the milling portion 230 is processed to be inwardly recessed from one side of the opposite surface of the metal body 200 such that a bezel (not assigned a reference numeral) is formed on the outside to accommodate the antenna member 100.

The metal body 200 may have a shape in which a plurality of bodies are configured within a single sheet. Accordingly, the plurality of metal bodies 200 may be automatically processed simultaneously. As the sheet for such mass processing of the metal bodies 200 is generally well-known in the art, a detailed description thereof will be omitted.

The operation (b) of assembling the antenna member 100 is an operation of assembling the antenna member 100.

The antenna member 100 includes the primary coil antenna 110, the secondary coil antenna 120, and the tuning capacitor portion 150 patterned and mounted on the substrate 140 formed of a flexible material. In addition, the light-emitting patterns 135a and 135b are formed on the substrate 140, and the plurality of LED chips 131 to 134 are mounted on the light-emitting pattern 135. At this time, the light-emitting pattern portion 143 may be provided with a light diffusion unit (not shown) centered around each of the LED chips 131 to 134.

For example, the light diffusion unit (not shown) may form a dam centered around the LED chips 131 to 134, or as another embodiment, the light diffusion unit may be a plastic liquid resin (e.g., a light-transmitting epoxy) that is applied and cured in an upper portion of the LED chips 131 to 134 to diffuse light.

The shielding sheet 300 is laminated on the substrate on which the plurality of LED chips 131 to 134 are mounted, and the LED chips 131 to 134 are exposed to the outside through holes processed in the shielding sheet 300.

Here, the light-emitting device 130 may be connected to the primary coil antenna 110 and the secondary coil antenna 120 in a contact or non-contact manner.

The operation (c) of assembling the antenna member 100 and the metal body 200 is an operation of assembling the antenna member 100 with the shielding sheet 300 laminated thereon to the milling portion 230 inwardly recessed on the lower surface of the metal body 200.

The molding operation (d) is an operation of injecting a molding material 610, such as epoxy, into the accommodation opening 210 and the transmission hole 220 to mold the molding material. Here, after molding, a resin layer is formed on the upper and lower surfaces of the metal body 200, providing insulation and protection to the upper and lower surfaces of the metal body 200.

The operation (e) of bonding printed sheets 621 and 622 is an operation of bonding the printed sheets to the upper and lower surfaces of the assembly, on which a resin layer has been formed after molding. The printed sheets 621 and 622 may be bonded using a laminating process. In addition, the printed sheets 621 and 622 may be laminated with magnetic stripe tape or an overlay film.

Alternatively, the printed sheets 621 and 622 may be bonded to the upper surface of the metal body 200, and a DP printing process may be further included on the printed sheets 621 and 622 bonded to the upper surface of the metal body 200.

The pocket milling operation (f) is an operation of processing a recess 611 in the molding material 610. A worker processes the molding material 610 to form the recess 611 at the upper end of the molding material 610, thereby forming a shape into which the card chip 400 may be assembled.

The chip insertion operation (g) is an operation of assembling the card chip 400 onto the upper surface. Here, the card chip 400 is a semiconductor chip mounted on the upper surface of the chip substrate and is installed in the recess 611 of the molding material 610 in the reverse direction. At this time, the molding material 610 and the card chip 400 are bonded using an adhesive, such as a hot melt or adhesive film.

Through the above process, the manufacturing of a metal card according to an embodiment and another embodiment of the present disclosure is completed. In addition, the metal card according to the present disclosure may include other embodiments depending on the thickness of a metal card.

That is, through the aforementioned processes, the present disclosure enables the production of a metal card using materials harmless to the human body, and in addition, by emitting light in a point light emission manner through the metal body 200, the card may provide aesthetic appeal during use.

In addition, the present disclosure includes another embodiment. Hereinafter, another embodiment of the present disclosure is described.

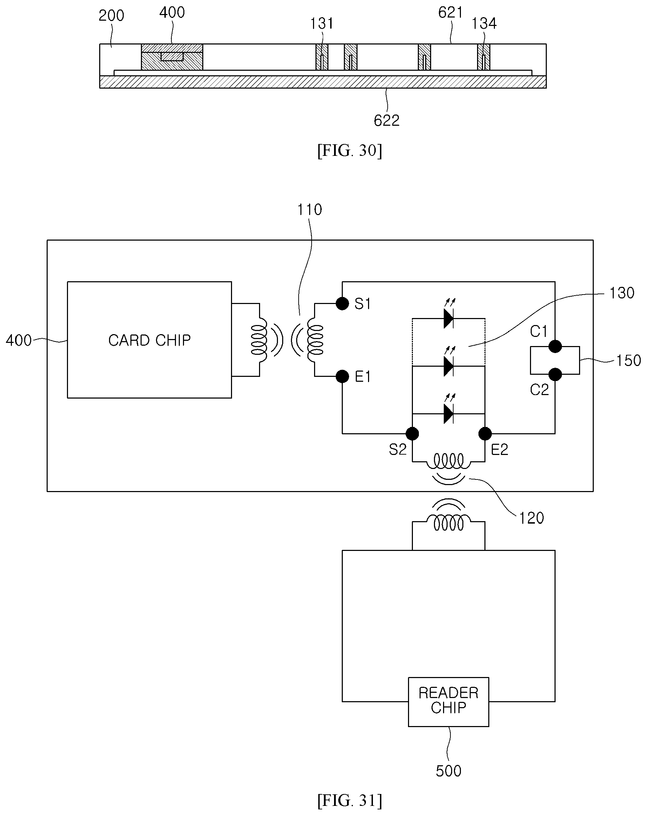

FIG. 31 is a circuit diagram of a metal card and a reader according to another embodiment of the present disclosure.

Referring to FIG. 31, a metal card according to another embodiment of the present disclosure may include the antenna member 100 assembled with the metal body 200 formed of metal and including the primary coil antenna 110, the secondary coil antenna 120, and the light-emitting unit 130, and a card chip 400.

The primary coil antenna 110 may communicate with the card chip 400, and the secondary coil antenna 120 may communicate with a reader chip 500. The primary coil antenna 110 and the secondary coil antenna 120 are installed as loop type antennas on the antenna member.

Here, a starting point S1 of the primary coil antenna 110 is connected to an ending point E2 of the secondary coil antenna 120, and an ending point E1 of the primary coil antenna 110 is electrically connected to a starting point S2 of the secondary coil antenna 120.

Such a configuration may be achieved by coupling the antenna member 100 (see FIG. 16), described below, to the assembled metal body 200. The metal body 200 is described with reference to FIGS. 14 and 15.

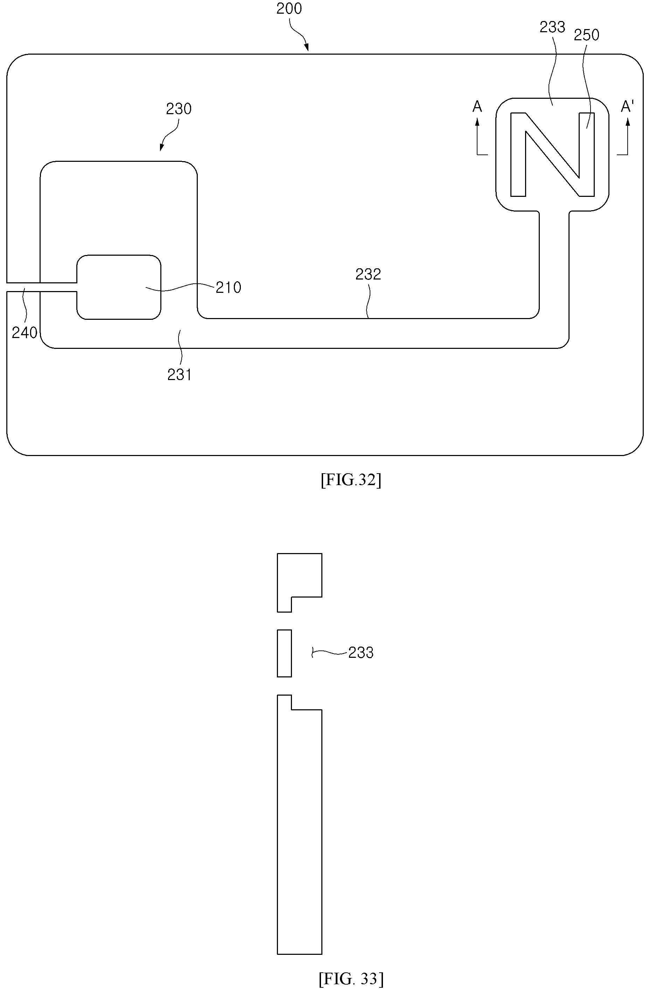

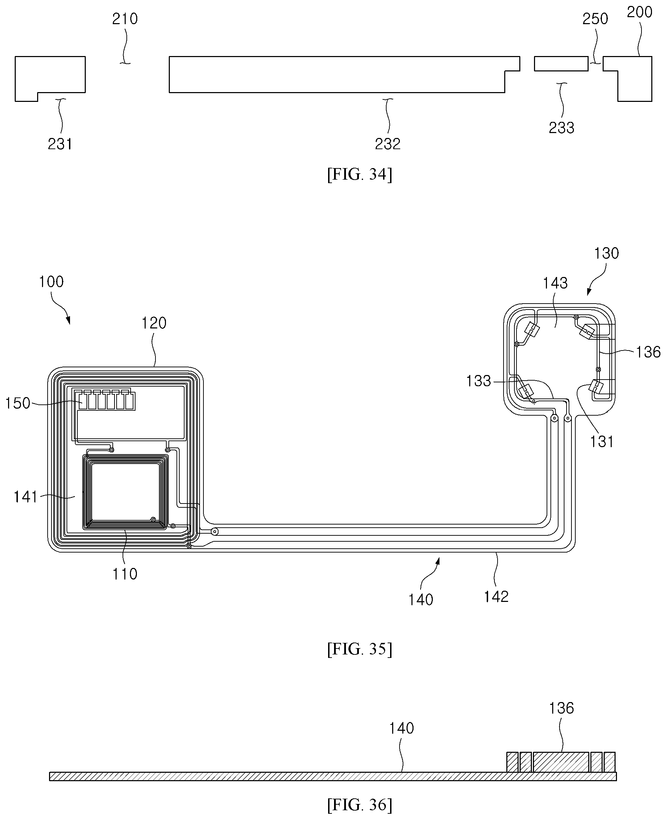

FIG. 32 is a plan view illustrating a metal body according to another embodiment. FIG. 33 is a side view of the metal body, and FIG. 34 is a front view.

Referring to FIGS. 32 to 34, the metal body 200 may be formed of a metal plate 200 and may accommodate the aforementioned antenna member 100 and the card chip 400. Printing may be possible on at least one of the two sides of the metal body 200.

To this end, the metal body 200 may include an accommodation opening 210 for accommodating the card chip 400, a transmission opening 250 opened to allow light emitted from the light-emitting unit (130, see FIG. 16) to be transmitted therethrough, the milling portion 230 processed to accommodate the antenna member 100, and a slit portion 240 extending in one direction from one side of the milling portion 230.

The accommodation opening 210 is opened to accommodate the card chip 400 from one side. Here, the accommodation opening 210 may be formed within a region on the opposite side in which the milling portion 230 is milled.

The slit portion 240 is cut to extend from the accommodation opening 210 to the outside of the metal body 200. This slit portion 240 serves to provide a power supply effect when current is induced to the antenna.

The transmission opening 250 is cut along a predetermined character or shape at a position spaced from the accommodation opening 210 to form a space cut to allow light emitted from the light-emitting unit 130, which is assembled and installed below, to be transmitted therethrough. The transmission opening 250 may be filled with a light-transmitting plastic resin for light diffusion or protection of the LED 131.

The milling portion 230 is processed into a recess inwardly recessed from the opposite surface of the metal body 200 to form a space in which the antenna unit is accommodated. More specifically, the milling portion 230 may include an antenna accommodation recess 231 inwardly recessed from one side to accommodate the antenna pattern, a light-emitting accommodation recess 233 formed as an inwardly recessed recess to accommodate the light-emitting unit 130 from the opposite side, and an extension recess 232 extending inwardly between the antenna accommodation recess 231 and the light-emitting accommodation recess 233.

The antenna accommodation recess 231 is inwardly recessed from the opposite side of the metal body 200. In this case, the antenna accommodation recess 231 may be formed over a region including the aforementioned accommodation opening 210.

The light emitting accommodation recess 233 may be formed as a recess inwardly recessed at a position spaced apart from the antenna accommodation recess 231 and may be formed as a region including the aforementioned transmission opening 250.

Here, the antenna accommodation recess 231 and the light emitting accommodation recess 233 may be formed at separate positions, as shown in the drawing, or installed adjacently. That is, the position of and distance between the antenna accommodation recess 231 and the light emitting accommodation recess 233 are not limited and may be modified in various embodiments.

The extension recess 232 is an inward recess extending between the antenna accommodation recess 231 and the light emitting accommodation recess 233 and accommodates the antenna member 100 to be described below.

The antenna member 100 of another embodiment will be described with reference to FIG. 35.

FIG. 35 is a plan view illustrating an antenna member of another embodiment, and FIG. 36 is a side view (b).

Referring to FIGS. 35 and 36, the antenna member 100 may further include an antenna substrate 140 having a pattern formed to support the primary coil antenna 110, the secondary coil antenna 120, and the light-emitting unit 130 to be electrically conductive, and the tuning capacitor portion 150.

The antenna substrate 140 may include an antenna pattern portion 141 having the area that may be accommodated in the antenna accommodation recess 231, a light-emitting pattern portion 143 in which the light-emitting unit 130 is installed, and an extension pattern portion 142 extending between the antenna pattern portion 141 and the light-emitting pattern portion 143. Preferably, the antenna pattern portion 141, the light-emitting pattern portion 143, and the extension pattern portion 142 are formed integrally.

In addition, the antenna pattern portion 141, the light-emitting pattern portion 143, and the extension pattern portion 142 include circuit patterns capable of inputting and outputting electrical signals.

The primary coil antenna 110 is mounted in a loop shape on the antenna pattern portion 141 and has the starting point connected to the starting point of the secondary coil antenna 120 via the tuning capacitor portion 150 and an ending point electrically connected to the starting point of the secondary coil antenna 120.

The secondary coil antenna 120 is installed in a loop shape on the outside of the primary coil antenna 110 (e.g., the outer edge of the antenna substrate 140).

The tuning capacitor portion 150 compensates for capacitance of the primary coil and may include a first terminal C1 to which the primary coil antenna 110 is connected and a second terminal C2 connected to the secondary coil antenna 120.

Here, the tuning capacitor portion 150 may be configured as an MLCC-type chip capacitor or a pattern capacitor including an array of upper and lower conductive patterns.

A plurality of LED chips 131 are mounted on the light-emitting pattern portion 143, and a pattern extending from the extension pattern portion 142 is formed on the light-emitting pattern portion 143 to allow electrical signals to be conducted to the LED chips 131.

Here, the light-emitting unit 130 may be provided with the LED chip 131 and a light diffusion unit 136 that surrounds the LED chip 131 itself or diffuses light in an upright dam shape so that light emitted from the LED chip 131 may be diffused.

When current is generated through the secondary coil antenna 120, the LED chip 131 emits light as power is supplied. The light emitted here may be diffused by the light diffusion unit 136 and emitted to the outside through the transmission opening 250.

Therefore, when the user brings his or her card close to the reader, the LED chip 131 emits light due to the current generated when the secondary coil antenna 120 communicates with the reader, allowing the user to check communication between the reader and the card chip 400.

In addition, during this series of user actions, light emitted from the metal card through the LED chip 131 may provide an aesthetic appeal to the viewer.

Another embodiment of the present disclosure includes the above-described configuration, and a manufacturing method according to another embodiment will be described below.

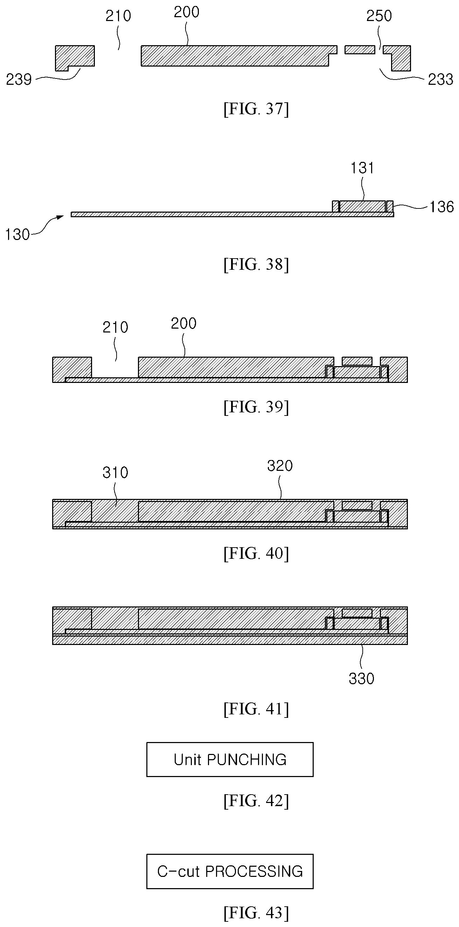

FIGS. 37 to 46 are diagrams illustrating each step of a manufacturing method according to another embodiment of the present disclosure.

Referring to FIGS. 37 to 46, an embodiment of the present disclosure may include an operation (a) of processing the metal body 200, an operation (b) of manufacturing the antenna member 100 including the primary coil antenna 110, the secondary coil antenna 120, and the light-emitting unit 130, an operation (c) of assembling the antenna member 100 to the metal body 200, an operation (d) of molding an opening of the metal body 200, an operation (e) of bonding a printed sheet 330, a punching operation (f), a C-Cut operation (g), an operation (h) of printing on an upper surface of the metal body 200, a pocket milling operation (i), and a chip insertion operation (j).

Referring to FIG. 37, the operation (a) of processing the metal body 200 is an operation of processing the metal body 200 to process the accommodation opening 210, the transmission opening 250, the slit portion 240, and the milling portion 230. The slit portion 240 is cut from one side of the metal body 200 and extends to the accommodation opening 210.

In addition, the milling portion 230 may include the antenna accommodation recess 231 inwardly recessed from one side of the opposite surface of the metal body 200 to accommodate the light-emitting unit 1130, the light-emitting accommodation recess 233 inwardly recessed to accommodate the light-emitting unit 1130 on the opposite side, and the extension recess 232 extending inwardly between the antenna accommodation recess 231 and the light-emitting accommodation recess 233.

Here, the metal body 200 may have a shape in which a plurality of bodies are configured within a single sheet. Accordingly, the plurality of metal bodies 200 may be automatically processed simultaneously. As the sheet for such mass processing of the metal bodies 200 is generally well-known in the art, a detailed description thereof will be omitted.

Referring to FIG. 38, in operation (b) of manufacturing the antenna member 100, the primary coil antenna 110, the secondary coil antenna 120, and a tuning capacitor 150 are mounted on the antenna pattern portion 141 of an antenna substrate 140 formed of a flexible material and having a circuit pattern patterned thereon. In addition, a plurality of LED chips 131 are mounted on the light-emitting pattern portion 143 of the antenna substrate 140. At this time, the light-emitting pattern portion 143 may be provided with the light diffusion unit 136 centered around each LED chip 131.

Here, the light diffusion unit 136 may be formed of a light-diffusing material to form a dam centered around the LED chip 131 or may be a plastic liquid resin (e.g., a light-transmitting epoxy) that may be applied to and cured on top of the LED chip 131 to diffuse light.

In addition, the antenna substrate 140 may be a flexible PCB formed of a soft material, and a plurality of antenna members may be grouped and aligned within a single sheet.

Referring to FIG. 39, the operation (c) of assembling the antenna member 100 is, for example, an operation of assembling the antenna member 100 to the milling portion 230 inwardly recessed on the lower surface of the metal body 200 based on the drawing. Here, the antenna pattern portion 141, in which the primary coil antenna 110, secondary coil antenna 120, and tuning capacitor portion 150 are mounted, is assembled into the antenna accommodation recess 231 of the milling portion 230, the extension pattern portion 142 is assembled to the extension recess 232, and the light-emitting pattern portion 143 is assembled to be aligned with the light-emitting accommodation recess 233.

Referring to FIG. 40, the molding operation (d) is an operation of injecting a molding material 310, such as epoxy, into the accommodation opening 210 and the transmission opening 250 to mold the molding material. After molding, a resin layer 320 is formed on the upper and lower surfaces of the metal body 200 to serve to perform insulation and protection on the upper and lower surfaces of the metal body 200.

Referring to FIG. 41, the operation (e) of bonding the printed sheet 330 is an operation of bonding the printed sheet 330 to the upper and lower surfaces of the metal body 200 on which the resin layer 320 has been formed after molding. The printed sheet 330 may be bonded through a laminating process. In addition, a magnetic stripe tape or film may be laminated with the printed sheet 330.

Referring to FIG. 42, the punching operation (f) is an operation of punching and separating the plurality of metal bodies 200 implemented within a single sheet.

Referring to FIG. 43, the C-Cut operation (g) is an operation of C-Cut processing on cut surfaces of the plurality of metal bodies 200 separated from the single sheet after punching. Since C-Cut processing is well-known in the art, a description thereof will be omitted.

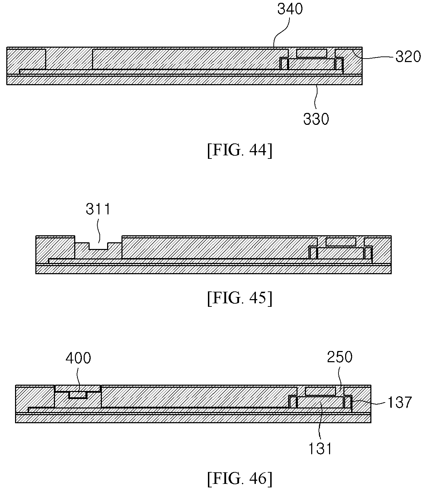

Referring to FIG. 44, the printing operation (h) is a step for printing (e.g., DP printing) on the metal-side resin layer 320.

The pocket milling operation (i) of FIG. 45 is a step for processing a recess 311 in the molding material 310. The worker processes the molding material 310 and the resin layer 320 on the upper surface to form the recess 311 on the upper end of the molding material 310 to process a shape into which the card chip 400 is assembled.

Referring to FIG. 46, the chip insertion operation (j) is an operation of assembling the card chip 400 onto the upper surface of the molding material 310. Here, the card chip 400 is a semiconductor chip mounted on the upper surface of the chip substrate and is installed in the recess 311 of the molding material 310 in the reverse direction. At this time, the molding material 310 and the card chip 400 are bonded using an adhesive, such as hot melt or adhesive film.

Through the above process, the metal card according to an embodiment of the present disclosure is manufactured. In addition, the metal card according to the present disclosure may include other embodiments depending on the thickness thereof.

That is, in the present disclosure, a metal card using a material harmless to the human body may be manufactured through the above process, and as the metal body 200 includes a light-emitting unit, aesthetic appeal may be provided when the card is used.

FIG. 13 is a circuit diagram including a metal card and a reader.

Referring to FIG. 13, a metal card according to the present disclosure may include an antenna member 100 assembled with a metal body 200 formed of metal and including a primary coil antenna 110, a secondary coil antenna 120, and a light-emitting unit 130, and a card chip 400.

The primary coil antenna 110 may communicate with the card chip 400, and the secondary coil antenna 120 may communicate with a reader chip 500. The primary coil antenna 110 and the secondary coil antenna 120 are installed as loop type antennas on the antenna member.

Here, a starting point S1 of the primary coil antenna 110 is connected to an ending point E2 of the secondary coil antenna 120, and an ending point E1 of the primary coil antenna 110 is electrically connected to a starting point S2 of the secondary coil antenna 120.

Such a configuration may be achieved by coupling the antenna member 100 (see FIG. 16), described below, to the assembled metal body 200. The metal body 200 is described with reference to FIGS. 14 and 15.

FIG. 14 is a perspective view illustrating a metal body, and FIG. 15 is a cross-sectional view.

Referring to FIGS. 14 and 15, the metal body 200 may be formed of a metal plate 200 and may accommodate the aforementioned antenna member 100 and the card chip 400. Printing may be possible on at least one of the two sides of the metal body 200.

To this end, the metal body 200 may include an accommodation opening 210 for accommodating the card chip 400, a transmission opening 250 opened to allow light emitted from the light-emitting unit (130, see FIG. 16) to be transmitted therethrough, the milling portion 230 processed to accommodate the antenna member 100, and a slit portion 240 extending in one direction from one side of the milling portion 230.

The accommodation opening 210 is opened to accommodate the card chip 400 from one side. Here, the accommodation opening 210 may be formed within a region on the opposite side in which the milling portion 230 is milled.

The slit portion 240 is cut to extend from the accommodation opening 210 to the outside of the metal body 200. This slit portion 240 serves to provide a power supply effect when current is induced to the antenna.

The transmission opening 250 is cut along a predetermined character or shape at a position spaced from the accommodation opening 210 to form a space cut to allow light emitted from the light-emitting unit 130, which is assembled and installed below, to be transmitted therethrough. The transmission opening 250 may be filled with a light-transmitting plastic resin for light diffusion or protection of the LED 131.

The milling portion 230 is processed into a recess inwardly recessed from the opposite surface of the metal body 200 to form a space in which the antenna unit is accommodated. More specifically, the milling portion 230 may include an antenna accommodation recess 231 inwardly recessed from one side to accommodate the antenna pattern, a light-emitting accommodation recess 233 formed as an inwardly recessed recess to accommodate the light-emitting unit 130 from the opposite side, and an extension recess 232 extending inwardly between the antenna accommodation recess 231 and the light-emitting accommodation recess 233.

The antenna accommodation recess 231 is inwardly recessed from the opposite side of the metal body 200. In this case, the antenna accommodation recess 231 may be formed over a region including the aforementioned accommodation opening 210.

The light emitting accommodation recess 233 may be formed as a recess inwardly recessed at a position spaced apart from the antenna accommodation recess 231 and may be formed as a region including the aforementioned transmission opening 250.

Here, the antenna accommodation recess 231 and the light emitting accommodation recess 233 may be formed at separate positions, as shown in the drawing, or installed adjacently. That is, the position of and distance between the antenna accommodation recess 231 and the light emitting accommodation recess 233 are not limited and may be modified in various embodiments.

The extension recess 232 is an inward recess extending between the antenna accommodation recess 231 and the light emitting accommodation recess 233 and accommodates the antenna member 100 to be described below.

The antenna member 100 is described with reference to FIG. 16.

FIG. 16 is a plan view (a) and a side view (b) illustrating an antenna member.

Referring to (a) and (b) of FIG. 16, the antenna member 100 may further include an antenna substrate 140 having a pattern formed to support the primary coil antenna 110, the secondary coil antenna 120, and the light-emitting unit 130 to be electrically conductive, and the tuning capacitor portion 150.

The antenna substrate 140 may include an antenna pattern portion 141 having the area that may be accommodated in the antenna accommodation recess 231, a light-emitting pattern portion 143 in which the light-emitting unit 130 is installed, and an extension pattern portion 142 extending between the antenna pattern portion 141 and the light-emitting pattern portion 143. Preferably, the antenna pattern portion 141, the light-emitting pattern portion 143, and the extension pattern portion 142 are formed integrally.

In addition, the antenna pattern portion 141, the light-emitting pattern portion 143, and the extension pattern portion 142 include circuit patterns capable of inputting and outputting electrical signals.

The primary coil antenna 110 is mounted in a loop shape on the antenna pattern portion 141 and has the starting point connected to the starting point of the secondary coil antenna 120 via the tuning capacitor portion 150 and an ending point electrically connected to the starting point of the secondary coil antenna 120.

The secondary coil antenna 120 is installed in a loop shape on the outside of the primary coil antenna 110 (e.g., the outer edge of the antenna substrate 140).

The tuning capacitor portion 150 compensates for capacitance of the primary coil and may include a first terminal C1 to which the primary coil antenna 110 is connected and a second terminal C2 connected to the secondary coil antenna 120.

Here, the tuning capacitor portion 150 may be configured as an MLCC-type chip capacitor or a pattern capacitor including an array of upper and lower conductive patterns.

A plurality of LED chips 131 are mounted on the light-emitting pattern portion 143, and a pattern extending from the extension pattern portion 142 is formed on the light-emitting pattern portion 143 to allow electrical signals to be conducted to the LED chips 131.

Here, the light-emitting unit 130 may be provided with the LED chip 131 and a light diffusion unit 136 that surrounds the LED chip 131 itself or diffuses light in an upright dam shape so that light emitted from the LED chip 131 may be diffused.

When current is generated through the secondary coil antenna 120, the LED chip 131 emits light as power is supplied. The light emitted here may be diffused by the light diffusion unit 136 and output to the outside through the transmission opening 250.

Therefore, when the user brings his or her card close to the reader, the LED chip 131 emits light due to the current generated when the secondary coil antenna 120 communicates with the reader, allowing the user to check communication between the reader and the card chip 400.

In addition, during this series of user actions, light emitted from the metal card through the LED chip 131 may provide an aesthetic appeal to the viewer.

The present disclosure includes the above-described configuration, and hereinafter, a method for manufacturing a non-contact type metal card having a light-emitting device according to the present disclosure is described.

FIG. 17 is a diagram illustrating each step of a method for manufacturing a non-contact type metal card having a light-emitting device according to the present disclosure.

Referring to FIG. 17, an embodiment of the present disclosure may include an operation (a) of processing the metal body 200, an operation (b) of manufacturing the antenna member 100 including the primary coil antenna 110, the secondary coil antenna 120, and the light-emitting unit 130, an operation (c) of assembling the antenna member 100 to the metal body 200, an operation (d) of molding an opening of the metal body 200, an operation (e) of bonding a printed sheet 330, a punching operation (f), a C-Cut operation (g), an operation (h) of printing on an upper surface of the metal body 200, a pocket milling operation (i), and a chip insertion operation (j).

The operation (a) of processing the metal body 200 is an operation of processing the metal body 200 to process the accommodation opening 210, the transmission opening 250, the slit portion 240, and the milling portion 230. The slit portion 240 is cut from one side of the metal body 200 and extends to the accommodation opening 210.

In addition, the milling portion 230 may include the antenna accommodation recess 231 inwardly recessed from one side of the opposite surface of the metal body 200 to accommodate the light-emitting unit 1130, the light-emitting accommodation recess 233 inwardly recessed to accommodate the light-emitting unit 1130 on the opposite side, and the extension recess 232 extending inwardly between the antenna accommodation recess 231 and the light-emitting accommodation recess 233.

Here, the metal body 200 may have a shape in which a plurality of bodies are configured within a single sheet. Accordingly, the plurality of metal bodies 200 may be automatically processed simultaneously. As the sheet for such mass processing of the metal bodies 200 is generally well-known in the art, a detailed description thereof will be omitted.

In the operation (b) of manufacturing the antenna member 100, the primary coil antenna 110, the secondary coil antenna 120, and a tuning capacitor portion 150 are mounted on the antenna pattern portion 141 of an antenna substrate 140 formed of a flexible material and having a circuit pattern patterned thereon. In addition, a plurality of LED chips 131 are mounted on the light-emitting pattern portion 143 of the antenna substrate 140. At this time, the light-emitting pattern portion 143 may be provided with the light diffusion unit 136 centered around each LED chip 131.

Here, the light diffusion unit 136 may be formed of a light-diffusing material to form a dam centered around the LED chip 131 or may be a plastic liquid resin (e.g., a light-transmitting epoxy) that may be applied to and cured on top of the LED chip 131 to diffuse light.

In addition, the antenna substrate 140 may be a flexible PCB formed of a soft material, and a plurality of antenna members may be grouped and aligned within a single sheet.

The operation (c) of assembling the antenna member 100 is, for example, an operation of assembling the antenna member 100 to the milling portion 230 inwardly recessed on the lower surface of the metal body 200 based on the drawing. Here, the antenna pattern portion 141, in which the primary coil antenna 110, secondary coil antenna 120, and tuning capacitor portion 150 are mounted, is assembled into the antenna accommodation recess 231 of the milling portion 230; the extension pattern portion 142 is assembled to the extension recess 232; and the light-emitting pattern portion 143 is assembled to be aligned with the light-emitting accommodation recess 233.

The molding operation (d) is an operation of injecting a molding material 310, such as epoxy, into the accommodation opening 210 and the transmission opening 250 to mold the molding material. After molding, a resin layer 320 is formed on the upper and lower surfaces of the metal body 200 to serve to perform insulation and protection on the upper and lower surfaces of the metal body 200.

The operation (e) of bonding the printed sheet 330 is an operation of bonding the printed sheet 330 to the upper and lower surfaces of the metal body 200 on which the resin layer 320 has been formed after molding. The printed sheet 330 may be bonded through a laminating process. In addition, a magnetic stripe tape or film may be laminated with the printed sheet 330.

The punching operation (f) is an operation of punching and separating the plurality of metal bodies 200 implemented within a single sheet.

The C-Cut operation (g) is an operation of C-Cut processing on cut surfaces of the plurality of metal bodies 200 separated from the single sheet after punching. Since C-Cut processing is well-known in the art, and thus, a description thereof will be omitted.

The printing operation (h) is a step for printing (e.g., DP printing) on the metal-side resin layer 320.

The pocket milling operation (i) is a step for processing a recess 311 in the molding material 310. The worker processes the molding material 310 and the resin layer 320 on the upper surface to form the recess 311 on the upper end of the molding material 310to process a shape into which the card chip 400 is assembled.

The chip insertion operation (j) is an operation of assembling the card chip 400 onto the upper surface of the molding material 310. Here, the card chip 400 is a semiconductor chip mounted on the upper surface of the chip substrate and is installed in the recess 311 of the molding material 310 in the reverse direction. At this time, the molding material 310 and the card chip 400 are bonded using an adhesive, such as hot melt or adhesive film.

Through the above process, the metal card according to an embodiment of the present disclosure is manufactured. In addition, the metal card according to the present disclosure may include other embodiments depending on the thickness thereof.

That is, in the present disclosure, a metal card using a material harmless to the human body may be manufactured through the above process, and as the metal body 200 includes a light-emitting unit, aesthetic appeal may be provided when the card is used.

The present disclosure is not limited to the specific preferred embodiments described above, and it is obvious that anyone with ordinary skill in the art to which the invention pertains may make various modifications without departing from the gist of the present disclosure claimed in the claims, and that such modifications fall within the scope of the claims.

## Claims

1. A non-contact type metal card having a **light-emitting device,** the non-contact type metal card comprising:
a card chip;
an antenna member including an antenna including a primary coil antenna and a secondary coil antenna wound in a loop shape and a light-emitting unit including a plurality of LED chips;
a shielding sheet laminated on the antenna member; and
a metal body having an accommodation opening into which the card chip is inserted and having a milling portion processed to accommodate the shielding sheet and the antenna member on an inner side,
wherein the light-emitting unit emits light through a plurality of transmission holes aligned in the metal body.

2. A non-contact type metal card having a light-emitting device, the non-contact type metal card comprising:
a card chip;
an antenna member including an antenna including a primary coil antenna and a secondary coil antenna wound in a loop shape and a light-emitting unit including a plurality of LED chips;
a shielding sheet laminated on the antenna member; and
a metal body having an accommodation opening and a slit portion into which the card chip is inserted and having a milling portion processed to accommodate the shielding sheet and the antenna member on an inner side,
wherein the light-emitting unit emits light through a plurality of transmission holes aligned in the metal body.

3. A non-contact type metal card having a light-emitting device, the non-contact type metal card comprising:
a card chip;
an antenna member including an antenna including a primary coil antenna and a secondary coil antenna wound in a loop shape and a light-emitting unit including a plurality of LED chips; and
a metal body having an accommodation opening and a slit portion into which the card chip is inserted and having a milling portion processed to accommodate the antenna member on an inner side,
wherein the light-emitting unit emits light through a plurality of transmission holes aligned in the metal body.

4. The non-contact type metal card of at least one of claim 1 to claim 3, wherein the light-emitting unit includes a light-emitting pattern, on which an LED chip is mounted, including one or two or more loop coil patterns and a primary coil antenna and a secondary coil antenna for performing a wireless communication function in a non-contact manner on a substrate, as a substrate formed of a flexible material, on which a circuit is patterned.

5. The non-contact type metal card of at least one of claim 1 to claim 3, wherein the light-emitting unit includes a light-emitting pattern, on which an LED chip is mounted, configured to extend as a pattern from both ends of the primary coil antenna and the secondary coil antenna for performing a wireless communication function in a non-contact manner on the substrate, as a substrate formed of a flexible material, on which a circuit is patterned.

6. The non-contact type metal card of at least one of claim 1 to claim 3, wherein the antenna member further includes a tuning capacitor portion compensating for capacitance of a coil antenna, which is an MLCC type chip capacitor or a pattern capacitor including an arrangement of an upper conductive pattern and a lower conductive pattern on a substrate.

7. A method for manufacturing a non-contact type metal card having a light-emitting device, the method comprising: .
processing a metal body capable of accommodating a card chip and an antenna member so that light emitted from a plurality of LED chips is transmitted on one surface of the metal body in a point light emission manner;
processing a shielding sheet and laminating the shielding sheet on a substrate on which a primary coil antenna, a secondary coil antenna, and a light-emitting unit are mounted;
assembling the antenna member, on which the shielding sheet is laminated, to the metal body;
injecting a molding material into an accommodation opening and a transmission hole and molding;
bonding a printed sheet to any one of both sides of the metal body;
processing a recess matched to a shape of a card chip on the inside of an opening in which the card chip is to be mounted;
installing the card chip in the recess.

8. A method for manufacturing a non-contact type metal card having a light-emitting device, the method comprising: .
processing a metal body capable of accommodating a card chip and an antenna member so that light emitted from a plurality of LED chips is transmitted on one surface of the metal body in a point light emission manner;
laminating on a substrate on which a primary coil antenna, a secondary coil antenna, and a light-emitting unit are mounted;
assembling an antenna member on which a light-emitting unit is mounted to the metal body;
injecting a molding material into a slit portion and an accommodation opening and a transmission hole and molding;
bonding a printed sheet to any one of both sides of the metal body;
processing a recess matched to a shape of a card chip on the inside of an opening in which the card chip is to be mounted; and
installing the card chip in the recess.

9. The method of claim 7 and claim 8, wherein in a), a plurality of transmission holes are arranged to be spaced apart from each other but are arranged directly above the LED chip.

10. The method of claim 7, wherein a) includes: processing the accommodation opening to which the card chip is assembled to the metal body, the plurality of transmission holes aligned to allow light emitted from the light-emitting unit to be transmitted therethrough, and a milling portion to accommodate the antenna member assembled with a shielding sheet on the opposite surface.

11. The method of claim 7, wherein a) includes: processing the accommodation opening to which the card chip is assembled in the metal body, a slit formed on one surface of the accommodation opening in which the chip is accommodated to the end of an outer portion of the metal body, the plurality of transmission holes aligned to allow light emitted from the light-emitting unit to be transmitted therethrough, and the milling portion to accommodate the antenna member assembled with the shielding sheet on the opposite surface.

12. The method of claim 8, wherein a) includes: processing the accommodation opening to which the card chip is assembled in the metal body, the plurality of transmission holes aligned to allow light emitted from the light-emitting unit to be transmitted therethrough, and the milling portion to accommodate the antenna member assembled on the opposite surface.

13. The method of claim 8, wherein a) includes: processing the accommodation opening to which the card chip is assembled in the metal body, a slit formed on one surface of the accommodation opening in which the chip is accommodated to the end of an outer portion of the metal body, the plurality of transmission holes aligned to allow light emitted from the light-emitting unit to be transmitted therethrough, and the milling portion to accommodate the antenna member assembled on the opposite surface.

14. A non-contact type metal card having a light-emitting device, the non-contact type metal card comprising:
a card chip;
a metal body formed of metal material into which a card chip is accommodated on one surface; and
an antenna member including an antenna including a primary coil antenna and a secondary coil antenna wound in a loop shape and assembled to one surface of the metal body,
wherein the antenna member includes:
an antenna substrate formed of a flexible material, on which a circuit is patterned; and
a light-emitting unit mounted on the antenna substrate and electrically connected to at least one of the primary coil antenna and the secondary coil antenna to emit light.

15. The non-contact type metal card of claim 14, wherein the metal body includes a card chip, an accommodation opening opened so that the primary coil antenna and the secondary coil antenna are aligned vertically, a transmission opening cut to allow light emitted from the light-emitting unit to be radiated to the outside, and a milling portion inwardly recessed to accommodate the antenna substrate.

16. The non-contact type metal card of claim 14, wherein the antenna member further includes a tuning capacitor portion compensating for capacitance of a coil antenna, which is an MLCC type chip capacitor or a pattern capacitor including an arrangement of an upper conductive pattern and a lower conductive pattern on a substrate.

17. The non-contact type metal card of claim 14, wherein the antenna substrate includes an antenna pattern portion on which a plurality of coil antennas are mounted, a light-emitting pattern portion on which a light-emitting unit is installed, and an extension pattern portion connecting the antenna pattern portion and the light-emitting pattern portion.

18. The non-contact type metal card of claim 17, wherein the light-emitting unit includes a plurality of LED chips mounted on the light emitting pattern portion and a light diffusion unit diffusing light emitted from the LED chips.

19. A method for manufacturing a non-contact type metal card having a light-emitting device, the method comprising: .
processing, on a metal body, an accommodation opening for assembling a card chip, a transmission opening for transmitting light emitted from a light emitting unit, and a milling portion to accommodate an antenna substrate on the opposite surface;
mounting a primary coil antenna, a secondary coil antenna, and a light emitting unit on an antenna substrate and assembling the antenna substrate to the milling portion;
injecting a molding material into the accommodation opening and the transmission opening to mold the molding material and forming a resin layer on upper and lower surfaces of the metal body;
bonding a printed sheet to one of both surfaces of the metal body on which the resin layer is formed;
processing a recess matched to a shape of the card chip in the molding material; and
installing a card chip in the recess.

20. The method of claim 19, wherein the milling portion of a) includes an antenna accommodation recess inwardly recessed to accommodate the primary coil antenna and the secondary coil antenna on a lower surface of the metal body, a light-emitting accommodation recess inwardly recessed to accommodate the light-emitting unit in a region including a transmission opening, and an extension recess extending between the antenna accommodation recess and the light-emitting accommodation recess.

21. The method of claim 19, wherein, in b), the antenna substrate includes an antenna pattern portion on which the primary coil antenna and the secondary coil antenna are mounted, a light-emitting pattern portion on which a light-emitting unit including a plurality of LED chips is mounted, and an extension pattern portion extending between the antenna pattern portion and the light-emitting pattern portion, and the antenna pattern portion is accommodated in an antenna accommodation recess, the light-emitting pattern portion is accommodated in a light-emitting accommodation recess, and the extension pattern portion is accommodated in an extension recess.
